# EUROPEAN PATENT APPLICATION

(11) **EP 1 389 877 A2**
(43) Date of publication of application: **18.02.2004**
(21) Application number: 03017401.5
(22) Date of filing: 31.07.2003
(51) Int. Cl.: H04N 9/804

(54) **Playback apparatus for an information storage medium**

(30) Priority: 13.08.2002 JP 2002235834
(71) Applicant: Kabushiki Kaisha Toshiba, Tokyo (JP)
(72) Inventor: Taira, Kazuhiko, Intellectual Property Division, Minato-ku, Tokyo 105-8001 (JP); Tsumagari, Yasufumi, Intell. Property Division, Minato-ku, Tokyo 105-8001 (JP); Mimura, Hideki, c/o Intell. Property Division, Minato-ku, Tokyo 105-8001 (JP)
(74) Representative: Henkel, Feiler, Hänzel

(57) **Abstract**

An information storage medium (1) is provided which includes main image information (400) compliant with a high-image-quality system, first subsidiary image information (401a) compliant with the high-image-quality system, and second subsidiary image information (401b) compliant with a standard system. The stored information (400,401a,401b) is read from the information storage medium (1), the main image information (400) is down-converted into image information of the standard system, and the second subsidiary image information (401b) is superposed on the image information.

## Description

This invention also relates to a playback apparatus for an information storage medium, which plays back an image storage medium storing main image information of a high-image-quality television system and subsidiary image information thereof and displays an image thereof on an image display apparatus of a standard television system.

As is generally known, DVD (Digital Versatile Disk) video disks storing image contents of a SDTV (Standard Television) system have become widespread recently. Further, to play back the DVD video disks, DVD video disk players and image display apparatuses have come onto the market to play back the DVD video disks.

In the meantime, to achieve higher image quality, currently it is strongly demanded to record image contents of an HDTV (High Definition Television) system in DVD video disks. Further, in response to this demand, development of DVD video disk players and image display apparatuses compliant with the HDTV system is actively performed.

However, in the present circumstances, diffusion ratio of HDTV-compliant DVD video disk players and image display apparatuses is low, it is necessary to play back DVD video disks storing HDTV-compliant image contents in SDTV-compliant DVD disk players and image display apparatuses.

In such a case, SDTV-compliant DVD video disk players and image display apparatuses are required to down-convert HDTV-compliant image contents read from DVD video disks to conform the contents to SDTV display resolution.

Image contents stored in DVD video disks includes main image information and subsidiary image information, such as explanations and subtitles, which is displayed in a state of being superposed on the main image information. If the main image information is down-converted, a part of the subsidiary image information is omitted and the subsidiary image information becomes blurred and unclear.

With respect to this problem, for example, Jpn. Pat. Appln. KOKAI Pub. No. 4-83493 (published on March 17, 1992) discloses a structure wherein characters and figure information are displayed by being superposed on blank parts of picture on display, when image signals of a high-vision system is down-converted into a current NTSC (National Television System Committee) system and displayed therein.

However, the converter disclosed in the publication only performs on-screen display of internal information, such as a digital clock, ON/OFF timer, the selected channel and the date, on a blank part of a displayed picture, when image signals of the high-vision system is down-converted and displayed.

Specifically, this publication describes no solution of the problem that a part of subsidiary image information is omitted and display of the subsidiary image is blurred, when HDTV-compliant main image information is down-converted into the SDTV system in playback of a DVD video disk containing the main image information and the subsidiary image information.

This invention has been made in consideration of the above circumstances, and is aimed at providing a playback apparatus for an information storage medium, which enable clear display of subsidiary image information without omission, when main image information of the HDTV system is down-converted into a standard system for display.

According to one aspect of the present invention, there is provided a playback apparatus for an information storage medium, the playback apparatus comprising: a reading section configured to read information stored in the information storage medium, the information having main image information compliant with a high-image-quality system, first subsidiary image information compliant with the high-image-quality system, and second subsidiary image information compliant with a standard system; a converting section configured to down-convert the main image information read by the reading section into image information of the standard system; and an adding section configured to superpose the second subsidiary image information read by the reading section on the image information converted by the converting section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing an embodiment of the present invention for explaining a data structure in a disk-shaped information storage medium;
FIG. 2 is an explanatory drawing of a data structure of a video object in the embodiment;
FIG. 3 is an explanatory drawing of two kinds of subsidiary image streams stored in the information storage medium in the embodiment;
FIG. 4 is a block diagram showing a playback apparatus which plays back the information storage medium in the embodiment;
FIG. 5 is a block diagram showing details of a main part of the playback apparatus in the embodiment; and.
FIG. 6 is a flow chart showing playback operation of main image information and subsidiary image information in the embodiment.

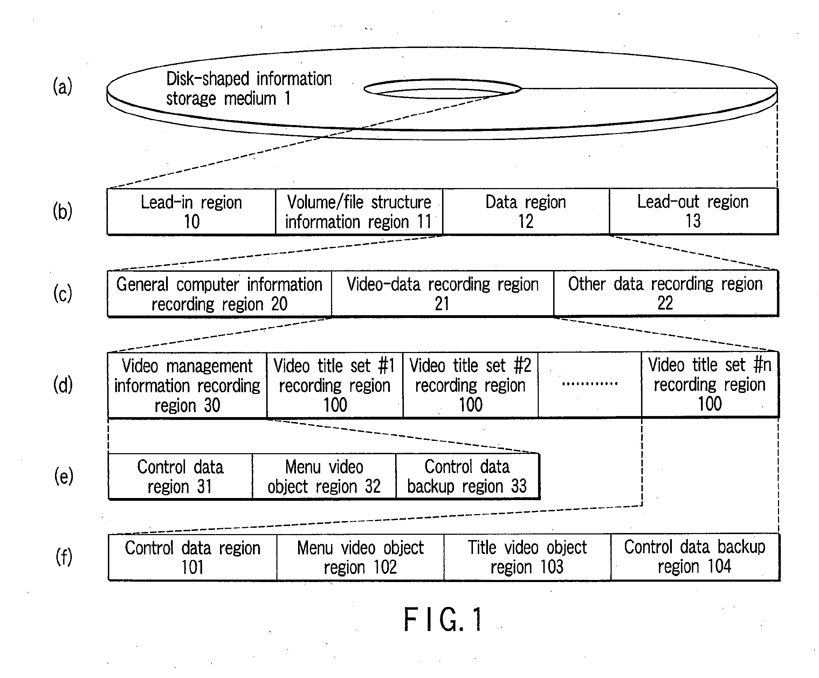

An embodiment of the present invention will now be described in detail with reference to drawings. FIG. 1 (a) shows an appearance of a disk-shaped information storage medium 1 explained in this embodiment.

As shown in FIG. 1 (b), The information storage medium 1 comprises, from its internal periphery, a lead-in region 10, a volume/file structure information region 11, a data region 12 and a lead-out region 13.

Among them, the data region 12 is formed by a general computer information recording-region 20, video-data recording region 21 and an other data recording region 22, as shown in FIG. 1 (c).

Further, as shown in FIG. 1 (d), the video-data recording region 21 has a video management information recording region 30 which manages all the information recorded in the information storage medium 1, and one or more video title set #n recording regions 100 which manage information of respective titles.

As shown in FIG. 1 (e), the video management information recording region 30 is formed by a control data. (HD_VMG.IFO file) region 31, menu video object (HD_VMGM. VOB file) region 32 and control data backup (HD_VMG. BUP file) region 33.

Further, as shown in FIG. 1 (f), the video title set #n recording region 100 has a control data (HD_VTS. IFO file) region 101, menu video object (HD_VTSM. VOB file) region 102, title video object (HD_VTS. VOB file) region 103 and control data backup (HD_VTS. BUP file) region 104.

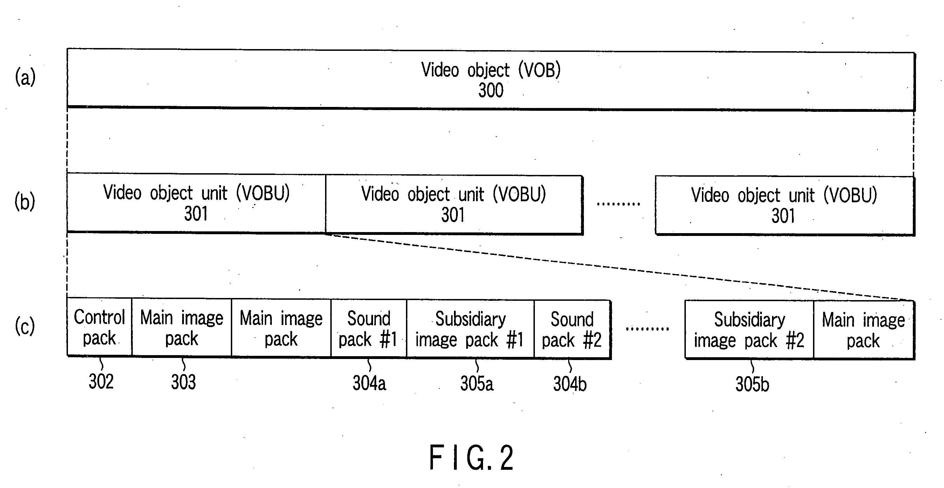

FIG. 2(a) shows a video object (VOB) 300. One or more video object 300 is stored in each of the video object regions 32, 102 and 103.

The video object 300 is formed by at least one video object unit (VOBU) 301, as shown in FIG. 2 (b). The video object unit 301 is the minimum unit of playback.

As shown in FIG. 2 (c), the video object unit 301 comprises a head control pack 302, a plurality of main image packs 303, selectable first and second sound packs 304a and 304b, and selectable first and second subsidiary image packs 305a and 305b.

Further, the selected first or second sound pack 304a or 304b and the selected first or second subsidiary image pack 305a or 305b are played back in synchronism with the main image packs 303 in the video object unit 301.

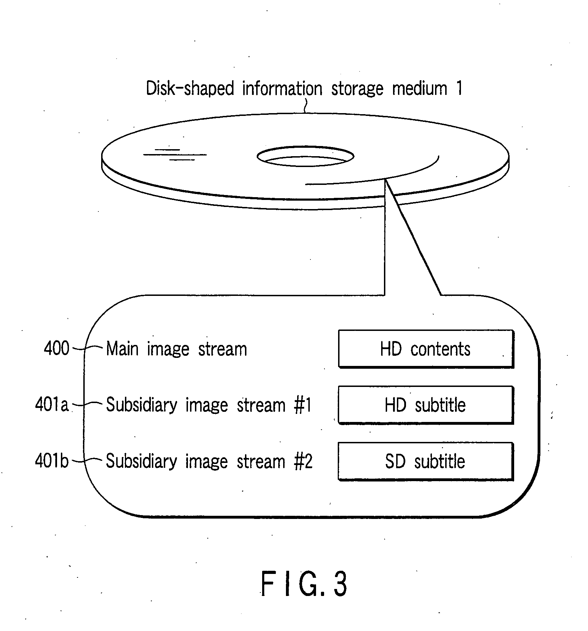

As shown in FIG. 3, the information storage medium 1 stores a main image stream 400 being contents of the HDTV system as a high image quality system, an HDTV-compliant subsidiary image stream 401a which is displayed being superposed on the main image stream 400, and a SDTV-compliant subsidiary image stream 401b which is displayed being superposed on the main image streams 400.

In this case, the HDTV-compliant subsidiary image stream 401a is stored as the first subsidiary image pack 305a. Further, the SDTV-compliant subsidiary image stream 401b is stored as the second subsidiary image pack 305b.

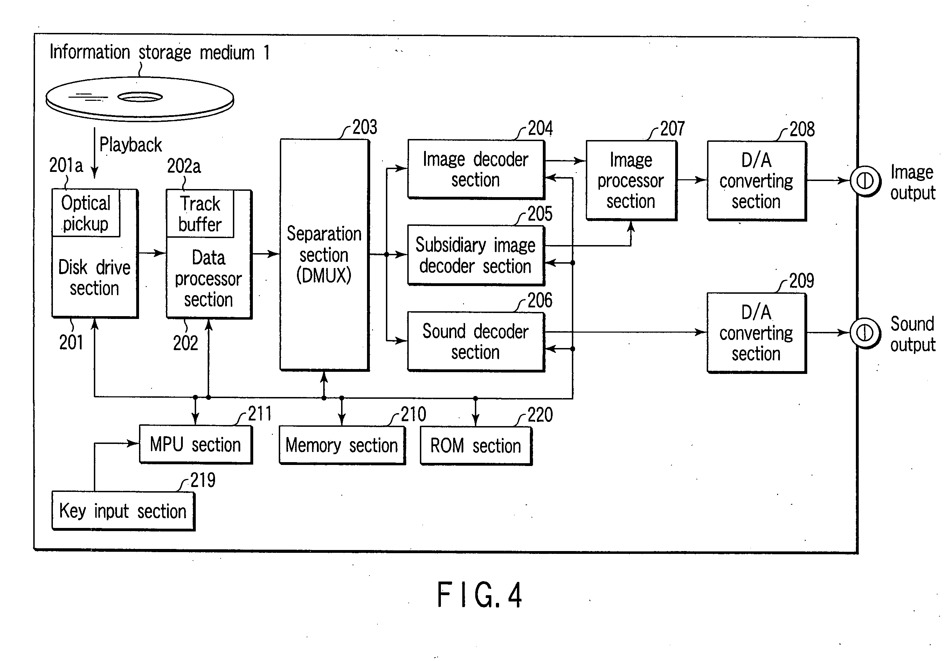

FIG. 4 shows a playback apparatus which reads and plays back information stored in the disk-shaped information storage medium 1. Specifically, the information storage medium 1 is set on a disk drive section 201. The disk drive section 201 rotates and drives the set information storage medium 1, and reads information stored in the information storage medium 1 by using an optical pickup 201a.

The information read by the disk drive section 201 is supplied to a data processor section 202, subjected to error correction processing, and thereafter stored in a track buffer 202a. Further, in the information stored in the track buffer 202a, the management information of the control data regions 31 and 101 is stored in a memory-section 210, and used for playback control and data management, etc.

Further, in the information stored in the track buffer 202a, the information of the video object regions 32,102 and 103 is transferred to a separation section 203, and separated into the main image packs 303, sound packs 304a and 304b and subsidiary image packs 305a and 305b.

Then, the information in the main image packs 303 is supplied to an image decoder section 204, the information in the sound packs 304a and 304b to a sound decoder section 206, and the information in the subsidiary image packs 305a and 305b to a subsidiary image decoder section 205, and they are decoded respectively.

The main image information decoded by the image decoder section 204 and the subsidiary image information decoded by the subsidiary image decoder section 205 are supplied to an image processor section 207 an subjected to a superposition processing. Thereafter, they are converted into analogue signals by a D/A (Digital/Analog) converting section 208, and outputted to an image display device (not shown, such as a CRT: Cathode Ray Tube) as image signals.

Further, the sound information decoded by the sound decoder section 206 is converted into analogue signals by a D/A converting section 209, and outputted to a sound playback device (not shown, such as a speaker) as sound signals.

An MPU (Micro Processing Unit) section 211 controls the above series of playback operations with respect to the information storage medium 1. The MPU section 211 receives operation information from a key input section 219, and controls the sections 201 to 206 on the basis of programs stored in a ROM (Read Only Memory) section 220.

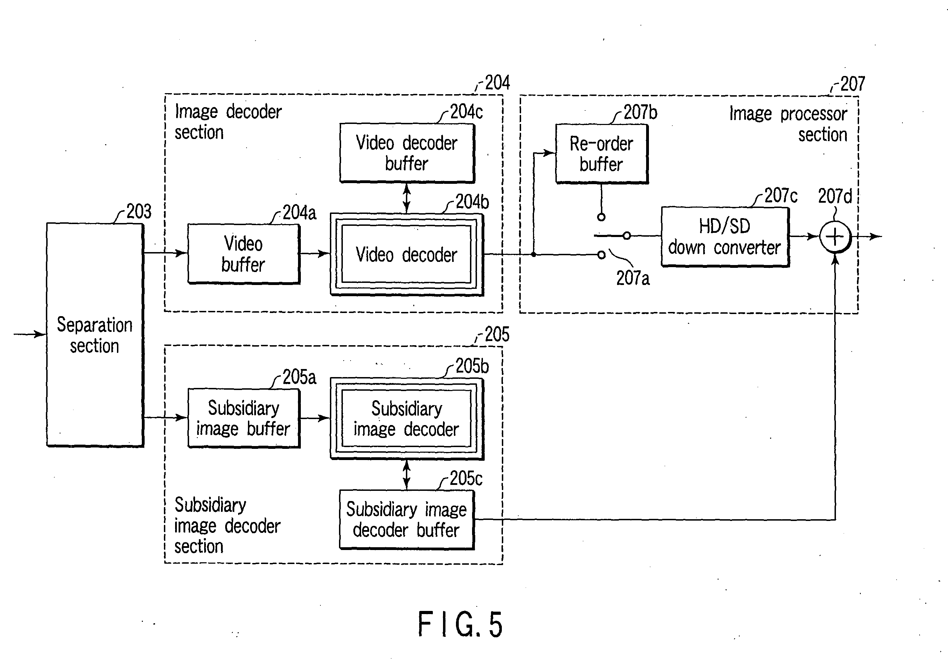

FIG. 5 shows details of the image decoder section 204, the subsidiary image decoder section 205 and the image processor section 207. Specifically, the main image information separated by the separation section 203 is supplied to the image decoder section 204, and the subsidiary image information separated by the separation section 203 is supplied to the subsidiary image decoder section 205.

The image decoder section 204 temporarily stores the input main image information in a video buffer 204a. Further, the main image information read from the video buffer 204a is subjected to decoding by the video decoder 204b in the video decoder buffer 204c serving as a working area.

Further, the subsidiary image decoder section 205 temporarily stores the input subsidiary image information in a subsidiary image buffer 205a. Further, the subsidiary image information read from the subsidiary image buffer 205a is subjected to decoding by the subsidiary image video decoder 205b in the subsidiary image decoder buffer 205c serving as a working area.

If the image processor section 207 is required to subject the main image information outputted from the image decoder section 204 to down-converting, the main image information is rearranged in playback order by a switch 207a in a re-order buffer 207b. Then, the main image information is supplied to an HD/SD down-converter 207c and down-converted therein from the HDTV system to the SDTV system being a standard system.

Further, if the main image information outputted from the image decoder section 204 is required to be down-converted, the subsidiary image decoder section 205 is controlled to decode the SDTV-compliant subsidiary image stream 401b stored in the second subsidiary image pack 305b.

Then, the main image information down-converted in the HD/SD down-converter 207c and the SDTV-compliant subsidiary image information decoded in the subsidiary image decoder section 205 are superposed by an adder 207d, outputted to the D/A converter 208 and displayed as an image.

Thereby, the SDTV-compliant subsidiary image information is superposed on image information obtained by down-converting HDTV-compliant the main image information into the SDTV system, and they can be displayed as an image on the SDTV-compliant image display device. In this case, SDTV-compliant subsidiary image information is displayed on the HDYV-compliant image display device, the subsidiary image information is clearly displayed without omission.

If the image processor section 207 is not required to subject the main image information outputted from the image decoder section 204 to down-converting, the image processor section 207 performs control such that the main image information is reordered by the switch 207a by using the reorder buffer 207b, and then outputted in the unprocessed state from the HD/SD down-converter. Specifically, the HD/SD down-converter 207c is controlled to output input signals with no processing.

Further, if the main image information outputted from the image decoder section 204 is not required to be down-converted, the subsidiary image decoder section 205 is controlled to decode the HDTV-compliant subsidiary image stream 401a stored in the first subsidiary image pack 305a.

Thereby, the main image information outputted from the image decoder section 204 and the HDTV-compliant subsidiary image information decoded by the subsidiary image decoder system .205 are superposed by the adder 207d, outputted to the D/A conversion section 208, and displayed as an image. Therefore, it is possible to superpose the HDTV-compliant subsidiary image information on the HDTV-compliant main image information, and to display them as an image on an image display device of the HDTV system.

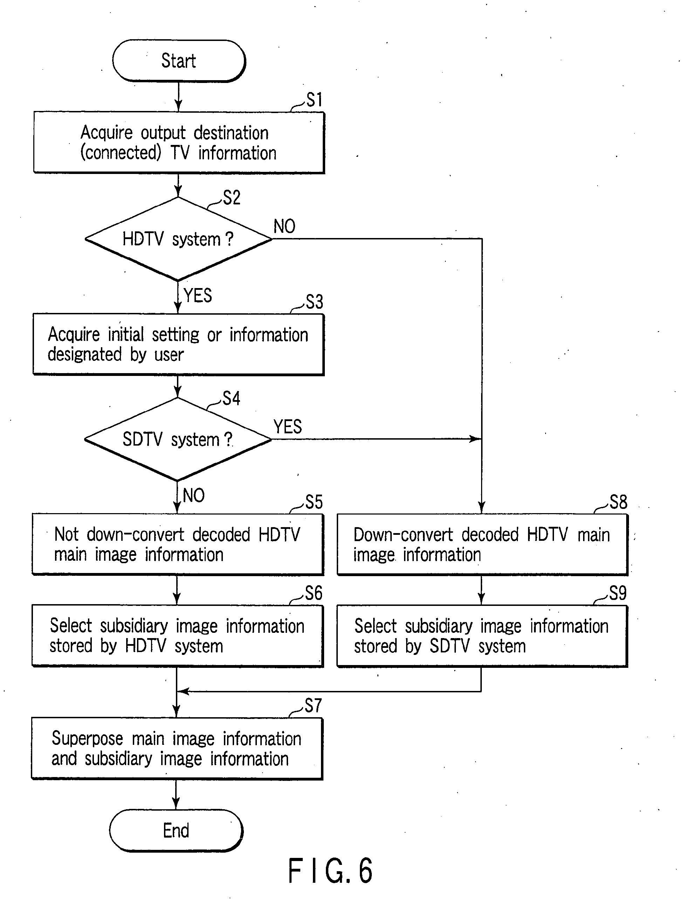

FIG. 6 is a flow chart showing the whole operations for superposing and displaying the above main image information and the subsidiary image information. Specifically, when the operation is started, in step 31, the MPU section 211 is connected to the playback apparatus, and acquires information (TV connection information) of an image display device to which image information from the playback apparatus is to be outputted.

Further, in step S2, on the basis of the acquired TV connection information, the MPU section 211 judges whether the connected image display device is compliant with the HDTV system or not. If the display device is judged as being HDTV-compliant (YES), the MPU section 211 acquires initial set information preset in the playback apparatus, or set information which is set by the user through the key input section 219, in step S3.

Thereafter, in step S4, the MPU section 211 judges whether image display in the SDTV system is designated or not, on the basis of the acquired set information. Further, if image display in the SDTV system is not designated (NO), in step S5, the MPU section 211 controls the image processor section 207 such that the image processor section 207 does not down-convert the HDTV-compliant main image information decoded by the image decoder section 204.

Further, in step S6, the MPU section 211 controls the separation section 203 to select the HDTV-compliant subsidiary image information, and controls the subsidiary image decoder section 205 to decode the selected HDTV-compliant subsidiary image information. Then, in step S7, the MPU section 211 superposes the HDTV-compliant subsidiary image information on the HDTV-compliant main image information, and displays them on the HDTV-compliant image display device, and ends its operation.

In the meantime, if the connected image display device has been judged as not being HDTV-compliant in the above step S2 (NO), or if it is judged in the above step S4 that SDTV image display is designated (YES), in step S8, the MPU section 211 controls the image processor section 207 to down-convert the HDTV-compliant main image information decoded in the image decoder section 204.

Further, in step S9, the MPU section 211 controls the separation section 203 to select the SDTV-compliant subsidiary image information, and controls the subsidiary image decoder section 205 to decode the selected SDTV-compliant subsidiary image information, and proceeds to step S7.

Thereby, in step S7, the SDTV-compliant subsidiary image information can be superposed on the main image information down-converted into the SDTV system, and they can be displayed on the SDTV-compliant image display device.

According to the above embodiment, the information storage medium 1 stores the HDTV-compliant main image information, HDTV-compliant subsidiary image information, and SDTV-compliant subsidiary image information.

Then, if an HDTV-compliant image display device is connected to the playback apparatus, the HDTV-compliant subsidiary image information played back from the information storage medium 1 is superposed on the HDTV-compliant main image information played back from the information storage medium 1, and they are displayed as an image on the HDTV-compliant image display device. Specifically, the HDTV-compliant subsidiary image information is displayed as an image on the HDTV-compliant image display device, and thus the subsidiary image information is clearly displayed with no omission.

If an SDTV-compliant image display device is connected to the playback apparatus, the HDTV-compliant main image information played back from the information storage medium 1 is down-converted into an SDTV-compliant image information. Then, the SDTV-compliant subsidiary image information played back from the information storage medium 1 is superposed on the down-converted image information, and they are displayed as an image on the SDTV-compliant image display device. Specifically, only the main image information is down-converted, and the SDTV-compliant subsidiary image information is displayed on the SDTV-compliant image display device, thus the subsidiary image information can be clearly displayed without omission.

The present invention is not limited to the above embodiment, but its constituent elements can be variously modified at the stage of carrying it out, within the range of not diverting from the gist of the invention. Further, various inventions can be formed by properly combining plural constituent elements disclosed in the above embodiment. For example, some of the constituent elements disclosed in the embodiment can be removed therefrom.

## Claims

1. A playback apparatus of an information storage medium, **characterized by** comprising:
a reading section (201-205) configured to read, from the information storage medium (1), the information having storing main image information (400) compliant with a high-image-quality system, first subsidiary image information (401a) compliant with the high-image-quality system, and second subsidiary image information (401b) compliant with a standard system, the information (400, 401a, 401b) stored therein;
a converting section (207c) configured to down-convert the main image information (400) read by the reading section (201-205) into image information of the standard system; and
an adding section (207d) configured to superpose the second subsidiary image information (401b) read by the reading section (201) on the image information converted by the converting section (207c).

2. A playback apparatus according to claim 1, **characterized in that**
the first subsidiary image information (401a) can be superposed and displayed on the main image information (400).

3. A playback apparatus according to claim 1, **characterized in that**
the first and second subsidiary image information (401a, 402b) is contained in information forming a minimum playback unit, as different selectable packs (305a, 305b).

4. A playback apparatus according to claim 1, **characterized in that**
the first and second subsidiary image information (401a, 401b) is contained in a video object unit (301) forming a minimum playback unit in a DVD video disk, as different selectable subsidiary image packs (305a, 305b).

5. A playback apparatus according to claim 1, **characterized in that**
the high-image-quality system is HDTV, and the standard system is SDTV.

6. A playback apparatus according to claim 1, **characterized in that**
the information storage medium (1) comprising: a data region (100) in which image information is stored; and a management region (30) in which management information concerning the data region is stored,
and the data region (100) stores the main image information (400), first subsidiary image information (401a) and second subsidiary image information (401b).

7. A playback apparatus according to claim 1, **characterized in that**
the converting section (207c) down-converts HDTV mage information into SDTV image information.

8. A playback apparatus according to claim 1, **characterized in that**
the converting section (207c) is configured to be selectively switchable between a first state in which the main image information (400) read by the reading section (201-205) is outputted with no processing, and a second state in which the main image information (400) read by the reading section (201-205) is outputted after being down-converted into image information of the standard system; and
the adding section (207d) superposes the first subsidiary image information (401a) read by the reading section (201-205) on the image information outputted from the converting section (207c) when the converting section (207c) is in the first state, and superposes the second subsidiary image information (401b) read by the reading section (201-205) on the image information outputted from the converting section (207c) when the converting section (207c) is in the second state.
